# EUROPEAN PATENT APPLICATION

(11) **EP 4 696 721 A1**
(43) Date of publication of application: **18.02.2026**
(21) Application number: 24194048.5
(22) Date of filing: 12.08.2024
(51) Int. Cl.: C08F 6/24, C08F 8/48, C08F 216/06, C08F 216/38, C08L 29/04, C04B 35/634, C04B 35/468, C08L 29/14

(54) **USE OF MODIFIED POLYVINYL ACETALS AS BINDER IN CERAMIC GREEN SHEETS**

(71) Applicant: Kuraray Europe GmbH, 65795 Hattersheim (DE)
(72) Inventor: Schirra, Dominic, Hofheim am Taunus (DE); Mummy, Florian, 60325 Frankfurt am Main (DE); Frank, Michael, 55268 Nieder-Olm (DE)
(74) Representative: Janßen, Christian Oliver

(57) **Abstract**

Use of a polyvinyl acetal as a binder for the production of a ceramic green sheet or a ceramic moulded body wherein the polyvinyl acetal has a OH-blockiness VV/(VB+BB) of less than 0.340 as determined by 13C-NMR as described in the description and wherein VB+BB is measured as the integration limits of the resonance peak 42.9 - 44.6 ppm and VV is measured as the integration limits of the resonance peak 44.6 - 46.0 ppm. The OH-blockiness is caused by an isomerisation reaction in which the acetalised polyvinyl alcohol is heated slowly (0.45°C/minute) from 20°C to 65°C and kept at this temperature for 120 minutes

## Description

The invention is directed to the use of modified polyvinyl acetals as binder in ceramic green sheets.

Ceramic materials like ceramic capacitators for the electronics industry are generally produced by sintering of a so-called green sheet, i.e. a film-like, thin moulded body, which contains the ceramic materials. For the production of these green sheets, a suspension of metal oxides, plasticizers, dispersing agents and binders in organic solvents is produced. This suspension is subsequently applied by means of a suitable process (i.e. doctor blade process) in the desired thickness onto a carrier film and the solvent is removed. The green sheet thus obtained must be free from cracks, exhibit a smooth surface and still have a certain elasticity.

Polyvinyl acetals such as polyvinyl butyral (PVB) are frequently used as binders for the production of ceramic green sheets. To this end, DE 4 003 198 A1 describes the production of a casting slip for ceramic green films in which polyvinyl butyral with a residual polyvinyl acetate content of 0 to 2% by weight is used as binder.

In recent years, multi-layer ceramic capacitors (MLCC) are becoming increasingly important for the electronic industry. MLCCs consist of a number of individual capacitors stacked together in parallel and contacted via the terminal surfaces. Due to the advancing miniaturization of the electronic components, the size of the powder particles can be as small as 10 nm. Hence, the production demands an increased accuracy of the ceramic sheets used therein. Additionally, the multi-layer stacks of ceramic green sheets are often wound up to a roll in the production process.

The elongation-at-break of PVB is a key parameter that helps achieving the desired mechanical properties in ceramic green sheets, ensuring they are robust enough for subsequent processing and application steps. A higher elongation at break indicates that the PVB binder can allow the green sheet to be more flexible. This flexibility is essential during handling and processing, as it reduces the risk of cracking or breaking. An optimal elongation-at-break ensures that the green sheets maintain their integrity during the sintering process, leading to high-quality sintered sheets with excellent dielectric properties.

To this end, there is a need in the industry for further improved binders to be used in the suspensions.

Accordingly, one objective of the invention was to provide binders for ceramic green sheets leading to improved adhesion, improved dispersion effect, an improved environmental and safety impact and/or with a better economical profile in the production and use of the ceramic green sheet, and especially with improved elongation-at-break.

Surprisingly, the current inventors have now found that the use of polyvinyl acetals modified with a low blockiness of the polyvinyl alcohol hydroxyl groups leads to superior performance in the production of ceramic green sheets.

Accordingly, the present invention concerns the use of a polyvinyl acetal as a binder for the production of a ceramic green sheet or a ceramic moulded body wherein the polyvinyl acetal has a OH blockiness W-(BV+BB) of less than 0.340 determined by 13C-NMR as described in the description and wherein BV+BB is measured as the integration limits of the resonance peak 42.9 - 44.6 ppm and W is measured as the integration limits of the resonance peak 44.6 - 46.0 ppm.

Preferably, the OH blockiness is less than 0.335, more preferably less than 0.333, most preferably less than 0.330, specifically less than 0.325.

Also preferably, the OH blockiness is from 0.200 to 0.340, more preferably from 0.250 to 0.335, most preferably from 0.275 to 0.330 and specifically from 0.300 to 0.325.

The OH blockiness of the polyvinyl acetal is defined as the ratio of the number of methylene groups of two adjacent alcohol sequences (VV) and the sum of the number of methylene groups of adjacent alcohol/acetal sequences and acetal/acetal sequences (VB+BB) and is measure as described in the experimental section further below.

The polyvinyl acetal of the present invention can be obtained by subjecting an aldehyde to an acetalization reaction under acid catalysis. The degree of blockiness can be adjusted during the so-called "holding step", in which the reverse acetalization step can equilibrate into a thermodynamically more stable configuration. Longer holding times and higher temperatures during the holding step generally lead to the thermodynamically more stable form, i.e. to a polyvinyl acetal with lower blockiness.

The degree of polymerization of the polyvinyl acetal is equivalent to the degree of polymerization of the polyvinyl alcohol that serves as the starting material in the acetalization reaction. The degree of polymerization of the polyvinyl alcohol was determined according to JIS-K6726.

"Polyvinyl alcohol" shall denote the homopolymer with the idealized formula [CH2CH(OH)]ₙ, i.e. co-polymers - for example derived from a co-polymerization with ethylene - shall not fall under the definition of "polyvinyl alcohol".

Preferably, the degree of polymerization of the polyvinyl acetal is from 1500 to 2000, most preferably from 1700 to 1800.

Although there is no particular limitation on the degree of saponification of the acetate groups, it is preferably 85 mol% or more, more preferably 95 mol% or more, still more preferably 98 mol% or more, and most preferably 99 mol% or more. Preferably, the polyvinyl acetal has a polyvinyl acetate content of from 0.1 to 5 % by weight, more preferably 0.5 to 2.0 % by weight.

Preferably, the polyvinyl acetal has a polyvinyl alcohol content between 28.0 and 38.0 mol% measured according to DIN ISO 53240, more preferably between 30.0 and 35.0 mol%, most preferably between 30.5 and 33.5 mol% measured according to DIN ISO 53240.

Preferably, the degree of acetalization is 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde, acetaldehyde and/or n-butyraldehyde. Specifically, the polyvinyl acetal is a polyvinyl butyral.

Also preferably, the polyvinyl acetals according to the present invention are mixed acetals, i.e. they comprise at least two different acetal groups. The most preferable combination is a mixture of acetals derived from acetaldehyde and n-butyraldehyde.

Also preferably, the polyvinyl acetal has a particle size distribution Dv 50 of more than 130 calculated according to ISO 13320 and measured by laser diffraction according to the method described below.

Also preferably, the polyvinyl acetal has a particle size distribution Dv 10 of more than 80 calculated according to ISO 13320 and measured by laser diffraction according to the method described in the description.

In another aspect, the invention concerns a polyvinyl acetal with a OH blockiness W/(VB+BB) from 0.300 to 0.340 determined by 13C-NMR as described in the description and wherein VB+BB is measured as the integration limits of the resonance peak (42.9-44.6 ppm) and W is measured as the integration limits of the resonance peak (44.6-46.0 ppm). Preferably, the OH blockiness is from 0.200 to 0.340, more preferably from 0.250 to 0.335, most preferably from 0.275 to 0.330 and specifically from 0.300 to 0.325.

Preferably, the polyvinyl alcohol content of the polyvinyl acetal between 28.0 and 38.0 mol% measured according to DIN ISO 53240, more preferably between 30.0 and 35.0 mol%, most preferably between 30.5 and 33.5 mol%.

Also preferably, the polyvinyl acetal has a polyvinyl alcohol content between 30.0 and 35.0 mol% measured according to DIN ISO 53240 and a polyvinyl acetate content between 0.5 and 2.0 mol% measured according to DIN ISO 3681.

In another aspect, the present invention concerns a suspension composition comprising one or more inorganic pigments, one or more organic solvents, one or more binders, one or more plasticizers, and one or more dispersing agents, wherein binder is the binder as described above.

The inorganic pigments can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNbzOs, MgTa₂O₆, ZnTa₂O₆, (ZnMg)TiOs, (ZrSn)TiO₄ and Ba₂Ti₉O₂₀. The average particle diameter of the inorganic pigments is preferably about 0.01 to 1 µm.

The organic solvent may be chosen from aromatic compounds, such as toluene and xylene, and alcohol compounds, such as ethyl alcohol, isopropyl alcohol and butyl alcohol and more preferably, mixtures thereof.

Suitable dispersing agents include fish oil, phosphoric acid esters and functional polymers comprising polyoxyalkylene groups on side chain, such as the MALIALIM^{™} series commercially available from NOF America Cooperation.

In addition to the binder according to the present invention, the suspension may comprise other components chosen inter alia from other binders like cellulose resins, acrylic resins, vinyl acetate resins, polyvinyl alcohol resins; plasticizers such as polyethylene glycol or phthalic esters, and/or a defoamer.

The method to produce the suspension composition is not specifically limited. Various dispersing methods may be used, for example, a method of using a media-type mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like. The mixture is passed through a small gap between a first roller and a second roller, which roll independently from each other and are adjacent to each other with the small gap therebetween, so as to be compressed and kneaded, and subsequently, the mixture is passed between the second roller and a third roller, which rolls and is adjacent to the second roller with a smaller gap therebetween than the gap between the first and the second rollers, so as to be further compressed and kneaded.

Preferably, the powdered ceramic, dispersing agent, and solvent (mixture) are premixed and dispersed so that the dispersing agent is adsorbed on the powdered ceramic. In a second step, the binder is to the mixture thus formed, and subsequently, mixing and dispersing is performed again.

The thickness of the coating film produced by these processes can be 0.25 to 25 µm, and typically, 5 to 20 µm.

### Examples

### Example 1

100 parts by weight of a polyvinyl alcohol with an acetyl content of 3.4 w% were dissolved in 1270 parts by weight of water with heating to 90 °C. 55 parts by weight of n-butyraldehyde were added at a temperature of 40 °C and 82.4 parts by weight of 20 % hydrochloric acid were added with stirring at a temperature of 20 °C within 10 min, after which the polyvinyl butyral (PVB) precipitated. The mixture was then held at 20 °C for a further 15 min with stirring, then heated to 65 °C within 100 min and was held at this temperature for 120 min. The PVB was separated after cooling to ambient temperature, washed neutral with water and dried to a solid content of > 99 % and sieved with a 1000 mm sieve. A PVB with a polyvinyl alcohol content of 21.59 % by weight and a polyvinyl acetate content of 2.17 % by weight was obtained.

### Comparative example 1

100 parts by weight of a polyvinyl alcohol with an acetyl content of 3.4 w% were dissolved in 1270 parts by weight of water with heating to 90 °C. 55 parts by weight of n-butyraldehyde were added at a temperature of 40 °C and 82.4 parts by weight of 20 % hydrochloric acid were added with stirring at a temperature of 15 °C within 10 min, after which the polyvinyl butyral (PVB) precipitated. The mixture was then held at 15 °C for a further 15 min with stirring, then heated to 69 °C within 100 min and was held at this temperature for 120 min. The PVB was separated after cooling to ambient temperature, washed neutral with water and dried to a solid content of > 99 % and sieved with a 1000 mm sieve. A PVB with a polyvinyl alcohol content of 21.52 % by weight and a polyvinyl acetate content of 2.10 % by weight was obtained.

### Comparative example 2

100 parts by weight of a polyvinyl alcohol with an acetyl content of 3.4 w% were dissolved in 1270 parts by weight of water with heating to 90 °C. 55 parts by weight of n-butyraldehyde were added at a temperature of 40 °C and 82.4 parts by weight of 20 % hydrochloric acid were added with stirring at a temperature of 11 °C within 10 min, after which the polyvinyl butyral (PVB) precipitated. The mixture was then held at 11 °C for a further 15 min with stirring, then heated to 73 °C within 100 min and was held at this temperature for 120 min. The PVB was separated after cooling to ambient temperature, washed neutral with water and dried to a solid content of > 99 % and sieved with a 1000 mm sieve. A PVB with a polyvinyl alcohol content of 21.58 % by weight and a polyvinyl acetate content of 2.13 % by weight was obtained.

### Measurement of the OH blockiness

The 13C-NMR measurements were carried out using a 400 MHz (1H resonance frequency, Bruker AVANCE III) spectrometer. 12 % by weight solutions of PVB were produced in deuterated dimethyl sulphoxide (DMSO-d6) in NMR tubes with a diameter of 10 mm. Chromium(III) acetylacetonate was added in an amount of 0.9 % by weight as a relaxation agent. The NMR measurement was carried out in the inverse gated decoupling mode at 80 °C. The chemical shift of the 13C spectrum is referenced through the solvent 13C resonance according to IUPAC recommended method. The calculation of the OH-blockiness is based on the integration limits of the resonance peak BV+BB (42.9-44.6 ppm) and VV (44.6-46.0 ppm).

### Measurement of the Particle Size Distribution (PSD)

The particle size distribution was analysed with a particle size analyser (Mastersizer 3000/Aero S. Malvern). The size distribution was calculated with Dv 10, Dv 50 and Dv 90 according to ISO 13320.

### Preparation of inorganic dispersion

1.3 g of a polyoxyalkylene dispersing agent (MALIALIM^{™} series, name: SC-0505K, supplier: NOF) was added to a mixed solvent of 25 g of toluene and 25 g of ethanol and dissolved by stirring. Next, 130 g of barium titanate powder (manufactured by Fuji Titanium Industry, UQBT-20) and 500 g of ZrO₂ beads (diameter: 2 mm) were added to the obtained solution. The organic dispersion was mixed for 6-8 hours on a roller mixer.

### Preparation of resin solution

A resin solution was prepared by adding 10.4 g of the (polyvinyl) acetal resin and 3.95 g of the plasticizer 3G8 to a mixed solvent of 59.8 g of ethanol and 59.8 g of toluene. The mixture is stirred to dissolve the resin.

### Ceramic green sheet production

The resin solution was added to the obtained inorganic dispersion and mixed using a roller block mixer for 10 h to obtain a composition for a ceramic green sheet. The ZrO₂-beads were separated from the dispersion using a nylon screen/filter.

The obtained dispersion was degassed and casted according to the doctor blade process using an automized film application machine. A siliconized PET (Hostaphan^{®} RN 2 SLK, thickness 75 µm) was used as casting support. After casting, the film was dried overnight. To remove residual solvent, the films were dried in an oven for 1 hours at 50°C and subsequently drawn off.

The films obtained had a thickness of 19 µm and exhibited to cracks, blisters or defects during optical assessment.

From the green sheets concerned, suitable tensile specimens according to DIN EN ISO 527-3, Type 2 (150 mm x 20 mm) in the form of a so-called "stripe" were punched out. 8 tensile specimens per type of film were punched out cross to the direction of casting and inspected by human eye. The 5 specimen which appeared to have the least flaws from the punching process were selected for measurement for both Example 1 and Comparable Example 1 and 2.

The samples were conditioned before measurement at a temperature of 23 °C and a relative humidity of 50% for 24 hours.

A universal tensile test machine (ZwickiLine Z0,5 TN from Zwick/Roell) was used for tensile force measurement. The measurements were carried under controlled conditions, being 23 °C and 50% relative humidity in accordance with DIN EN ISO 527-1 and DIN EN ISO 527-3.

**Table 1**

| **PVB properties** | E1 | CE1 | CE2 |
|---|---|---|---|
| Holding temperature [°C] | 65 | 69 | 73 |
| Holding time at holding temperature [min] | 120 | 120 | 120 |
| Polyvinyl alcohol [mol%] | 30.8 | 30.8 | 30.8 |
| Polyvinyl acetate content [mol%] | 1.5 | 1.5 | 1.5 |
| Degree of acetalisation [mol%] | 67.7 | 67.7 | 67.7 |
| OH-blockiness W/(BV+BB) | 0.322 | 0.342 | 0.350 |
| Viscosity PVB. 5% sol. in ethanol [mPas] | 186 | 196 | 221 |
| PSD Dv 10 | 85 | 75 | 69 |
| PSD Dv 50 | 142 | 126 | 122 |
| PSD Dv 90 | 259 | 260 | 563 |
| Tensile strength [N/mm^2] | 8 | 8 | 11 |
| Elongation [%] | 24 | 7 | 9 |

Table 1 shows the data of example 1 and comparative examples 1 and 2, which illustrate the change in OH-blockiness and therefore viscosity, particle size distribution and mechanical properties due to different production protocols. The results of the tensile test show that the ceramic green sheets obtained with the inventive polyvinyl acetal have a significant higher value for the elongation-at-break compared to the comparative examples with a higher OH blockiness.

### Measurement of the dissolution rate

6 g of PVB powder was mixed with 94 wt-% of a solvent mixture (7:3 hexane:toluene). The the dissolution process, a rotating and tilting mixer was used (supplier IKA/GER, model: Kipp-/Rollenmischer, digital, 6). After defined periods of time (0, 15, 30, 45, 60, 90 and 120 minutes and 24 hours) the mixer was stopped and 1 g of the supernatant was taken and the solid content was determined with the help of an oven to evaporate the solvent. For the analysis of the solid content a digital precision balance was used. Results were calculated in % of dissolved material and displayed on the y-axis. The x-axis shows the dissolution time in minutes and 24 hours (last data point).

### Results

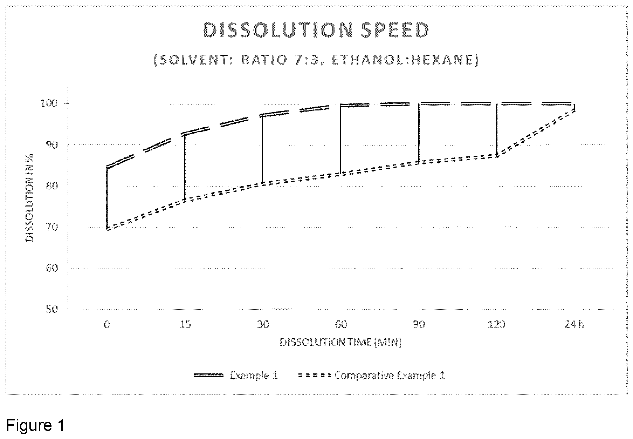

Figure 1 shows the results of the measurements of the dissolution rate of Example 1 and Comparative Example 1. Example 1 dissolved significantly faster than Comparative Example 1. For example, after 30 min of dissolution time the comparative sample 1 is only dissolved by 80% compared to Example 1, which is almost fully dissolved after the time. Thus, the inventive polyvinyl acetal can lead to a substantial improvement in the production time of the ceramic green sheets.

## Claims

1. Use of a polyvinyl acetal as a binder for the production of a ceramic green sheet or a ceramic moulded body wherein the polyvinyl acetal has a OH-blockiness W/(VB+BB) of less than 0.340 as determined by ¹³C-NMR as described in the description and wherein VB+BB is measured as the integration limits of the resonance peak 42.9 - 44.6 ppm and W is measured as the integration limits of the resonance peak 44.6 - 46.0 ppm.

2. The use according to claim 1 wherein the OH-blockiness is less than 0.330.

3. The use according to claim 1 wherein the OH-blockiness is from 0.200 to 0.340.

4. The use according to any one of the claims above wherein the OH-blockiness is from 0.250 to 0.330.

5. The use according to any one of the claims above wherein the polyvinyl acetal has a polyvinyl alcohol content between 28.0 and 38.0 mol% measured according to DIN ISO 53240.

6. The use according to any one of the claims above wherein the polyvinyl acetal has a polyvinyl alcohol content between 30.0 and 35.0 mol% measured according to DIN ISO 53240.

7. The use according to any one of the claims above wherein the polyvinyl acetal has a polyvinyl alcohol content between 30.5 and 33.5 mol% measured according to DIN ISO 53240.

8. The use according to any one of the claims above wherein the polyvinyl acetal has a polyvinyl acetate content between 0.5 and 2.0 mol% measured according to DIN ISO 3681.

9. The use according to any one of the claims above wherein the polyvinyl acetal is polyvinyl butyral.

10. The use according to any one of the claims above wherein the polyvinyl acetal has a particle size distribution Dv 50 of more than 130 calculated according to ISO 13320 and measured by laser diffraction according to the method described in the description.

11. The use according to any one of the claims above wherein the polyvinyl acetal has a particle size distribution Dv 10 of more than 80 calculated according to ISO 13320 and measured by laser diffraction according to the method described in the description.

12. The use according to any one of the claims above wherein the polyvinyl acetal has a viscosity measured as a 5% solution in ethanol of less than 190 mPas.

13. A polyvinyl acetal with a OH-blockiness W/(VB+BB) from 0.300 to 0.340 determined by 13C-NMR as described in the description and wherein VB+BB is measured as the integration limits of the resonance peak (42.9-44.6 ppm) and VV is measured as the integration limits of the resonance peak (44.6-46.0 ppm).

14. The polyvinyl acetal according to claim 13 with a polyvinyl alcohol content between 28.0 and 38.0 mol% measured according to DIN ISO 53240.

15. The polyvinyl acetal according to claim 13 with a polyvinyl alcohol content between 30.0 and 35.0 mol% measured according to DIN ISO 53240 and a polyvinyl acetate content between 0.5 and 2.0 mol% measured according to DIN ISO 3681.
